# EUROPEAN PATENT SPECIFICATION

(11) **EP 4 511 896 B1**
(45) Date of publication and mention of the grant of the patent: **31.12.2025**
(21) Application number: 23714488.6
(22) Date of filing: 21.03.2023
(51) Int. Cl.: H01M 8/04029

(54) **FUEL CELL SYSTEM**
BRENNSTOFFZELLENSYSTEM
SYSTÈME DE PILE À COMBUSTIBLE

(30) Priority: 21.04.2022 GB 202205780
(43) Date of publication of application: 26.02.2025
(73) Proprietor: Rolls-Royce plc, London N1 9FX (GB)
(72) Inventor: TACCONI, Jacopo, Derby Derbyshire DE24 8BJ (GB)
(74) Representative: Rolls-Royce plc
(86) International application number: PCT/EP2023/057114
(87) International publication number: WO 2023/202828

(56) References cited:
- JP-A- 2005 209 435
- US-B2- 9 017 890

## Description

### TECHNICAL FIELD

The present invention relates to fuel cell systems and particularly, although not exclusively, to cooling sub-systems within fuel cell systems such as hydrogen fuel cell systems.

### BACKGROUND

Fuel Cell (FC) heat management can be conducted via a separate cooling circuit forming part of an FC system or via evaporative cooling.

Where a separate cooling circuit is used for FC heat management, liquid water, or another coolant, is circulated through a channel in the stack of FCs contained within the FC system such that heat generated in the FC stack is transferred to the coolant and this coolant subsequently flows out of the FC stack. The heat transferred to the coolant in the FC stack is rejected from the cooling circuit via a heat exchanger (HEX), for example the HEX acting as a radiator that rejects the heat to atmosphere. In such a system, an air feed to the FC used in the FC reaction is a separate circuit and flows into a separate channel of the FC stack.

When evaporative cooling is used for FC heat management, cooling water and the air feed for the FC reaction are fed into the same channel(s) of the FC stack. Cooling of the FC stack is achieved through transfer of heat energy from the FC stack to the water to effect evaporation. The ratio of water to air fed into the FC stack is such that the air exiting the FC stack is saturated with water vapour and contains entrained water droplets. The water vapour contained in the FC stack outlet is then condensed to separate out the water; for example, by feeding the FC stack outlet to a coolant-air HEX (i.e. a radiator).

With either approach to FC heat management, a substantial challenge is the need to reject low-quality heat from the coolant into the environment.

This challenge becomes even greater when using the FC system in an aviation setting. The heat generated by a FC stack is proportional to the operating current (and thus power) of the FC stack. The times at which the power demand placed on, and thus heat generation in, a FC stack being used in an aircraft are greatest are during take-off and initial climb. For example, at take-off when the aircraft is at maximum take-off weight (MTOW). As an aircraft gains altitude, the ambient air temperature the aircraft is exposed to falls; however, the times of high power demand generally coincide with when the aircraft is at lower altitudes than the cruising altitude of the aircraft; thus, the heat being generated by the FC stack is greatest when the ambient temperature is relatively high in comparison to the average temperature during the aircraft's flight. This is particularly the case when the aircraft is taking off when the ambient air temperatures on the ground are high (Hot Day conditions).

Typically, in a closed-loop cooling sub-system, the above challenge is addressed by providing a HEX with a large heat transfer area and thus a high heat duty to sufficiently cool the coolant, and/or providing a cooling sub-system with a large volume of coolant such that the hot coolant leaving the FC stack represents a small fraction of the thermal mass of the coolant sub-system.

The heat duty across a HEX is a strong function of the temperature difference between the fluids on either side of that HEX - the greater the temperature difference, the greater the heat duty. Accordingly, an aircraft FC system with a cooling sub-system that relies on a HEX transferring heat from the coolant to the environment (i.e. as a radiator) to reduce the temperature of the coolant will require the HEX and coolant volume to be sized based on Hot Day MTOW conditions in order to ensure the cooling sub-system can continue to provide sufficient cooling to the FC stack. This results in a substantially larger HEX and coolant volume than if the sizing conditions were, for example, MTOW but with the ambient temperature at its mean for the aircraft's usage, rather than Hot Day.

An aircraft FC system having a cooling sub-system with a large HEX is problematic, because such a HEX is heavy, expensive and generates substantial drag. Similarly, using large volumes of coolant evidently means the coolant occupies more space within the aircraft, potentially necessitating an increase in the aircraft's size, and increases the mass of the aircraft. These problems become greater as the power of the aircraft increases and accordingly the necessary HEX size and coolant volume increase.

Moreover, with evaporative-cooling-based systems, there is an additional challenge that the amount of water that can be evaporated within the FC stack per unit volume of air is capped based on the water saturation point of the air. In order to maximise the amount of water that can be evaporated, the entry-side air humidity and pressure are ideally set to be low. However, low air pressure is not desirable due to the resulting low reaction rates within the FC, which negatively impacts the FC system's efficiency and performance.

The present invention has been devised in light of the above considerations.

### BRIEF SUMMARY

It is desired to provide an FC system having a cooling sub-system wherein the HEX of the cooling sub-system, which is used to reject heat transferred to the coolant into the atmosphere, is sized away from the conditions of peak ambient temperature and peak FC power (e.g. Hot Day MTOW).

Accordingly, in a first aspect there is provided an FC comprising:
a FC stack; and
a cooling sub-system comprising:
   a coolant tank;
   a stack feed line extending from the coolant tank to the FC stack, a pump being disposed on the stack feed line to pump coolant therethrough from the tank to the FC stack;
   a valve network including a first multi-outlet valve arrangement having a first valve inlet, a first valve outlet, and a second valve outlet;
   a coolant HEX;
   a coolant exhaust;
   a stack discharge line extending from the FC stack to the first valve inlet for removing coolant from the FC stack;
   a first recycle line extending from the first valve outlet to the coolant tank, a first side of the coolant HEX being disposed on the first recycle line to remove heat from the coolant recycled therethrough; and
   an exhaust line extending from the second valve outlet to the coolant exhaust;

wherein the first multi-outlet valve arrangement has:
   a first state in which first valve outlet is open, and the second valve outlet is closed, providing a closed-loop cooling sub-system in which a coolant path from the first multi-valve arrangement, through the coolant HEX to the coolant tank is open, and a coolant path from the first multi-valve arrangement to the coolant exhaust is closed; and
   a second state in which the first valve outlet is closed, and the second valve outlet is open, providing an open-vented cooling sub-system in which the coolant path from the first multi-valve arrangement to the coolant exhaust is open, and the coolant path from the first multi-valve arrangement, through the coolant HEX to the coolant tank is closed; and
wherein the cooling sub-system further comprises a computer-based controller configured to control the valve network to switch the first multi-outlet valve arrangement between the first state and the second state on the basis of a balance between a required heat duty of the cooling sub-system across the FC stack; and an achievable heat duty of the cooling sub-system across the coolant HEX.

This FC system, and in particular the cooling sub-system configuration, allows the coolant HEX to be sized at operating conditions away from Hot Day MTOW by having the exhaust line and the first multi-outlet valve arrangement that provides the possibility of the cooling system operating as a closed-loop system or an open-vented sub-system. Accordingly, at operating conditions such as Hot Day MTOW or similar, where the coolant HEX may be too small for the cooling sub-system to operate as a closed loop and still provide the required cooling to the FC stack, the cooling subsystem can be operated as an open-vented sub-system in which coolant exiting the FC stack is ejected from the cooling sub-system and no load is placed on the coolant HEX; at operating conditions away from Hot Day MTOW and similar, the coolant HEX size may be sufficient for the cooling sub-system to be operated as a closed-loop subsystem and still provide the cooling required by the FC stack, allowing the first multi-outlet valve arrangement to be set to recycle the coolant exiting the FC stack via the coolant HEX. Thus, the minimum heat transfer area of the coolant HEX needed to provide the required cooling to the FC stack to prevent the FC stack from overheating, is smaller than in a conventional cooling sub-system without the ability to operate as an open-vented cooling sub-system.

Some optional features of the present disclosure will now be set out. These are applicable singly or in any combination with an aspect of the present disclosure except where such a combination is clearly impermissible or expressly avoided.

Typically the controller of the cooling sub-system is further configured to switch first multi-outlet valve arrangement from the first state to the second state in response to an increase in the required heat duty of the cooling sub-system across the FC stack and/or a decrease in the achievable heat duty of the cooling sub-system across the coolant HEX. Furthermore, the controller is typically further configured to switch the first multi-outlet valve arrangement from the second state to the first state in response to a decrease in the required heat duty of the cooling system across the FC stack and/or an increase in the achievable heat duty of the cooling sub-system across the coolant HEX. A controller configured in this way helps the cooling sub-system to provide the required heat duty across the FC stack, whilst reducing the quantity of coolant ejected from the cooling sub-system via the exhaust by avoiding unnecessarily operating with the first multi-outlet valve arrangement in the second state.

The first multi-outlet valve arrangement may be configured to have a third state in which both the first valve outlet and the second valve outlet are open, providing a cooling sub-system in which a coolant path from the first multi-valve arrangement, through the coolant HEX to the coolant tank is open, and a coolant path from the first multi-valve arrangement to the coolant exhaust is open. Advantageously, the first multi-outlet valve arrangement having such a third state allows the amount of coolant ejected from the cooling sub-system during operation of the FC system to be reduced. This is because when transitioning from an open-vented cooling sub-system to a closed-loop cooling sub-system, the recycling of some of the coolant can be initiated prior to the point where the achievable heat duty across the coolant HEX is large enough for all of the coolant to be recycled whilst still meeting the required heat duty of the cooling sub-system across the FC stack. The controller may be further configured to be able to switch the first multi-outlet valve arrangement between all three of the first state, the second state and the third state depending on the balance between the required heat duty of the cooling sub-system across the FC stack and the achievable heat duty of the cooling sub-system across the coolant HEX. A controller configured in this way allows the amount of coolant ejected from the cooling sub-system during operation of the FC system to be reduced, as described above, and using the controller to set the first multi-outlet valve arrangement to the third state provides the cooling sub system with an additional control variable.

Typically, the cooling sub-system is configured to use water as the coolant. This is practical when the system is configured to eject coolant from the cooling sub-system into the surroundings via the exhaust.

The FC system may further comprise a cathode sub-system having an air feed line configured to feed air to the FC stack, and an air exhaust line configured to remove air from the FC stack, and an anode-side sub-system having a fuel feed line configured to feed fuel to the FC stack. Such a FC system can provide the FC stack with reactants for a FC reaction.

The cooling sub-system of the FC system may further comprise a water separation unit disposed on the air exhaust line to collect water from the air removed from the FC stack and a second recycle line extending from the water separation unit to the coolant tank. Such a FC system enables the separation of water from the air exhaust line and the recycling of this water into the cooling sub-system. This input of water may then allow the cooling sub-system to compensate for the water ejected from the system via the exhaust when operating with the first multi-outlet valve arrangement in the second state, allowing the coolant tank and the initial volume of coolant in the system to be made smaller than they would otherwise need to be.

Optionally, the FC system is configured such that the valve network further comprises: a second multi-outlet valve arrangement having a second valve inlet, a third valve outlet and a fourth valve outlet, the second valve inlet and fourth valve outlet being disposed on the stack feed line; and a first multi-inlet valve arrangement having a third valve inlet, a fourth valve inlet and a fifth valve outlet, the third valve inlet and the fifth valve outlet being disposed on the stack discharge line. Additionally, the cooling subsystem may further comprise a gas-pre-conditioning line extending from the third valve outlet to the fourth valve inlet. The controller may then be further configured to control the valve network to switch the second multi-outlet valve arrangement and the first multi-inlet valve arrangement between an open state in which the third valve outlet and the fourth valve inlet are open to open a coolant path through the gas-pre-conditioning line, and a closed state in which the third valve outlet and the fourth valve inlet are closed to close the coolant path through the gas-pre-conditioning line. The cathode-side sub-system may then further comprise a cathode-side HEX, a first side of the cathode-side HEX being disposed on the air feed line and a second side of the cathode-side HEX being disposed on the gas-pre-conditioning line between the third valve outlet and fourth valve inlet. Similarly, the anode-side sub-system may then further comprise an anode-side HEX, a first side of the anode-side HEX being disposed on the fuel feed line, and a second side of the anode-side HEX being disposed on the gas-pre-conditioning line between the third valve outlet and the fourth valve inlet. The controller may be further configured to open or close the gas-pre-conditioning line on the basis of a balance between two or more of: the required heat duty of the cooling sub-system (300) across the fuel cell stack; the achievable heat duty of the cooling sub-system (300) across the coolant heat exchanger; and the desired conditioning of the compressed air and/or the fuel stream. Conveniently, such an FC system allows the coolant sub-system to pre-cool air flowing into the FC stack via the air feed line and regulate the humidity of that air and/or to pre-condition the temperature of the fuel flowing into the FC stack via the fuel feed line, and thus improve the performance and control of the FC stack.

The cooling-sub system typically comprises a deioniser for the coolant. Such a deioniser may be disposed on the stack feed line. The deioniser can help to reduce the concentration of certain ions in the coolant that flows into the coolant channels of the FC stack, thereby limiting damage to the FC stack, for example, through minimising short circuiting and current leakage. It is preferable for the deioniser to be disposed on the stack feed line, especially when water is being provided into the cooling sub-system from the water separation unit, so that coolant is deionised just before entering the FC stack.

The cooling sub-system of the FC system may further comprise a HEX bypass line extending from the stack discharge line or the exhaust line to a position on the first recycle line downstream of the coolant HEX, and the controller may be further configured to open or close the HEX bypass line on the basis of a balance between the required heat duty of the cooling sub-system across the FC stack and the achievable heat duty of the cooling sub-system across the coolant HEX. Typically, the controller is further configured to close the HEX bypass line when the first multi-outlet valve arrangement is switched to the second state. Accordingly, an additional control variable of the cooling sub-system is provided by facilitating the bypassing of the coolant HEX, whilst still allowing the cooling sub-system to operate as a closed-loop cooling sub-system. Optionally, the controller may be further configured to be able to partially open the HEX bypass line, such that a coolant path through the coolant HEX and a coolant path through the HEX bypass line are open simultaneously. Such a configuration is useful in providing additional control over the FC system.

Optionally, the cooling sub-system further comprises an anti-icing coolant circuit extending from and returning to the first recycle line, the anti-icing coolant circuit being configured to carry coolant heated by the FC stack to ice protection systems of an aircraft, the heated coolant thereby losing heat to provide aircraft ice protection before returning to the first recycle line. Advantageously, this provides the cooling subsystem with another way in which to reject heat to the environment alongside the cooling HEX, and simultaneously reduces the amount of energy the aircraft may otherwise have to input into the anti-icing system, improving the vehicle's efficiency. Typically, the anti-icing coolant circuit is connected to the first recycle line in parallel to the coolant HEX to provide an additional control variable of the cooling sub-system.

Typically, the coolant exhaust comprises an exhaust nozzle. This may assist the cooling sub-system in ensuring that coolant travelling down the exhaust line is ejected from the cooling sub-system.

The FC stack may comprise a plurality of proton-exchange membrane fuel cells (PEMFCs). Advantageously an FC stack comprising PEMFCs is lightweight and has a high energy density in comparison to FC stacks comprising other types of FC.

Typically, the FC system will comprise an FC stack that is a hydrogen FC stack. The FC system having an FC stack that uses hydrogen as a fuel source is advantageous in that the only chemical species produced by the reaction of the FC stack is water.

Commonly, the coolant HEX is an air-cooled HEX, a second side of the coolant HEX being exposed to an external airflow (e.g. an aircraft external airflow) which receives heat from the coolant. Thus, the cooling sub-system is simplified in comparison to using another form of HEX as the coolant HEX.

In a second aspect there is provided a propulsion device comprising the FC system of the first aspect and an electrically powered propulsor. In this case, the FC system further comprises a power sub-system which harvests electrical power generated by the FC stack and which is electrically connected to the propulsor to supply the propulsor with the generated electrical power. Advantageously, such a propulsion device can be made lighter and smaller than an FC-powered propulsion device without a cooling sub-system able to operate as an open-vented cooling sub-system. This is because the coolant HEX in the propulsion device of the second aspect can be made lighter and smaller.

Such a propulsion device can be an aircraft propulsion device.

Indeed, in a third aspect there is provided an aircraft comprising the propulsion device of the second aspect.

In a fourth aspect there is provided a method of operating the FC system of the first aspect. The method may comprise:
operating the cooling sub-system as a closed-loop cooling sub-system in which the coolant path from the first multi-valve arrangement, through the coolant HEX and to the coolant tank is open and the coolant path from the first multi-valve arrangement to the coolant exhaust is closed by switching the first multi-outlet valve arrangement to the first state; and
operating the cooling sub-system as an open-vented cooling sub-system in which the coolant path from the first multi-valve arrangement to the coolant exhaust is open and the coolant path from the first multi-valve arrangement, through the coolant HEX and to the coolant tank is closed, by switching the first multi-outlet valve arrangement to the second state;
wherein switching the first multi-outlet valve arrangement between the first state and the second state is dependent on the required heat duty of the cooling sub-system across the FC stack and the achievable heat duty of the cooling sub-system across the coolant HEX. Advantageously, the FC stack can thereby be provided with the cooling required during operation, whilst allowing the coolant HEX of the cooling subsystem to be sized at conditions away from Hot Day MTOW conditions.

Optionally, the method may further comprise operating the cooling sub-system in a condition in which the coolant path from the first multi-valve arrangement to the coolant exhaust is open and the coolant path from the first multi-valve arrangement, through the coolant HEX and to the coolant tank is also open, by switching the first multi-outlet valve arrangement to the third state. Switching the first multi-outlet valve arrangement into and out of the third state is dependent on the required heat duty of the cooling sub-system across the FC stack and the achievable heat duty of the cooling sub-system across the coolant HEX. Advantageously, operating the cooling sub-system with the first multi-outlet valve arrangement in the third state allows the amount of coolant ejected from the cooling sub-system during operation of the FC system to be reduced. This is because when transitioning from an open-vented cooling sub-system to a closed-loop cooling sub-system, the recycling of some of the coolant can be initiated prior to the point where the achievable heat duty across the coolant HEX is large enough for all of the coolant to be recycled whilst still meeting the required heat duty of the cooling sub-system across the FC stack.

### BRIEF DESCRIPTION OF THE DRAWINGS

Embodiments and experiments illustrating the principles of the invention will now be discussed with reference to the accompanying figures in which:
- Figure 1: is a process flow diagram including a fuel cell system; and
- Figure 2: is a process flow diagram including a variant fuel cell system.

### DETAILED DESCRIPTION

Aspects and embodiments of the present invention will now be discussed with reference to the accompanying figures. Further aspects and embodiments will be apparent to those skilled in the art. All documents mentioned in this text are incorporated herein by reference.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

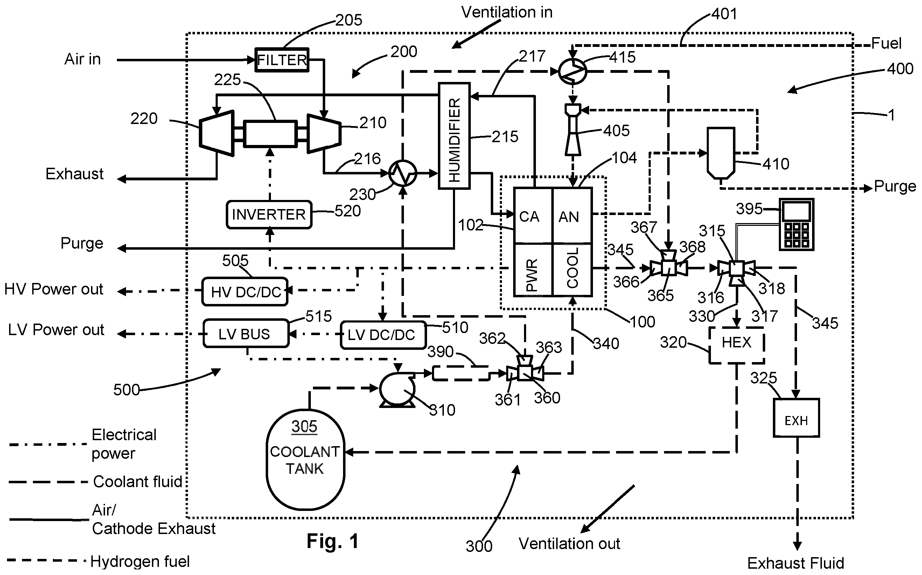

Figure 1 is a process flow diagram including an FC system 1. The FC system 1 comprises an FC stack 100 and four sub-systems: a cathode-side sub-system 200, a cooling sub-system 300, an anode-side sub-system 400 and a power sub-system 500. The FC stack 100 itself comprises a plurality of FCs, with each FC comprising an anode and a cathode side. Typically, the FCs making up the FC stack 100 are proton-exchange membrane fuel cells (PEMFCs). Inlets to each of the cathode and anode of each FC, through which reactants for an FC reaction can be provided, may be connected to common anode and cathode inlets for the FC stack 100. Accordingly, the FC stack 100 itself essentially has a cathode side 102 and an anode side 104.

The cathode-side sub-system 200 and the anode-side sub-system 400 interact with the cathode side 102 of the FC stack 100 and the anode side 104 of the FC stack 100, respectively. The cooling sub-system 300 is configured to manage heat generated in the FC stack 100 by the FC reaction. Specifically, the cooling sub-system 300 is configured to flow coolant through the FC stack 100, allowing heat to be exchanged from the FC stack 100 to the coolant, following which the coolant flows out of the FC stack 100. The power sub-system 500 is configured to provide a circuit connected to the cathode and anode of each of the FCs, thus allowing the voltage generated by the FC reaction to drive a current through said circuit for the harvesting of electrical power generated by the FC stack.

The FC system 1 is configured to conduct an FC reaction of a fuel, for example hydrogen, and oxygen. Accordingly, the cathode-side sub-system 200 is configured to deliver air to the cathode side 102 of the FC stack 100 for the FC reaction via an air feed line 216. Air coming into the cathode-side sub-system 200 first passes through a filter 205 to remove any debris within the incoming air, before then being compressed to a higher pressure in a compressor 210. Compressing the air prior to the FC stack 100 can improve the FC reaction kinetics and thus improve the efficiency and performance of the FC stack 100. Compressed air exiting the compressor 210 passes to a humidifier 215 prior to entering the cathode side 102 of the FC stack 100 via the air feed line 216. The humidifier 215 humidifies the compressed air travelling through the air feed line 216 prior to the compressed air entering the FC stack 100. A purge line is also provided from the humidifier 215.

An air stream leaving the cathode side 102 of the FC stack 100 in an air exhaust line 217 then also passes through the humidifier 215, which is disposed on the air exhaust line 217, so that water formed within the FC stack 100 can be used to humidify the compressed air in the air feed line 216, and then into a turbine 220 disposed on the air exhaust line 217. The air stream in the air exhaust line 217 is expanded in the turbine 220. Conveniently, the mechanical work provided by the expansion is used to, in part, power the compressor 210 via a turbocharger arrangement in which the turbine 220 is mechanically connected to the compressor 210. A motor 225 is also provided within the turbocharger arrangement to compensate for the difference in power provided by the turbine 220 and consumed by the compressor 210. The expanded air stream then exits the FC system 1 via the air exhaust line 217.

The humidifier typically comprises a small water circuit and/or a membrane that can transfer water across from the air exhaust line 217 into the air feed line 216.

The anode-side sub-system 400 is configured to deliver fuel to the anode side 104 of the FC stack 100 for the FC reaction. A fuel stream entering the FC system 1 via a fuel feed line 401 is passed to an ejector 405 before entering the anode side 104. The fuel stream flows through the anode side 104 and exits the FC stack 100 in an anode side exit stream. Typically, excess fuel is provided at the FC stack anode 104 to improve reaction performance over transient operations; as a consequence, the anode side exit stream, which comprises of a mixture of unreacted fuel and reaction products, is recirculated back into the anode inlet, allowing for optimal reactant distribution. FC reactions typically produce water (potentially alongside other reaction products). Thus, the anode side exit stream is passed to a water trap 410 to separate water from the rest of the contents of the fuel exit stream. The water trapped by the water trap 410, along with a portion of the anode side exit stream, is passed to a purge line, whilst the remaining portion of the anode side exit stream is recycled into the ejector 405 in a fuel recycle stream. Accordingly, it can be appreciated that the ejector 405 serves the purpose of pressure regulator for the fuel recycle stream and the fuel stream into the anode inlet.

The power sub-system 500 includes a direct-current-to-high-voltage-direct-current (HV DC/DC) converter 505 and a direct-current-to-low-voltage-direct-current (LV DC/DC) converter 510 to convert direct current generated in the power sub-system 500 by the FC reaction to high and low voltage direct currents, respectively. This allows the FC system 1 to provide both a high-voltage and low voltage DC power output. Additionally, the power sub-system 500 further comprises a low voltage bus 515, and a DC/AC inverter 510 to convert the direct current generated in the power sub-system to an alternating current supply. This alternating current supply can then be provided from the inverter 510 to the motor 225 in the cathode-side sub-system 200 driving the compressor 210.

Heat is a by-product of the FC reaction, and accordingly the cooling sub-system 300 is configured to allow the heat generated in the FC stack 100 by the FC reaction to be managed. Specifically, the cooling sub-system 300 is configured to flow coolant through the FC stack 100, allowing heat to be exchanged from the FC stack 100 to the coolant, following which the coolant flows out of the FC stack 100. The cooling subsystem comprises a coolant tank 305 in which a reservoir of coolant, typically water, is stored. A stack feed line 340 extends from the coolant tank 305 to the FC stack 100. A pump 310 is disposed on the stack feed line 340 to pump coolant therethrough from the tank 305 to the FC stack 100. As illustrated in Figure 1, the pump 310 can be powered using low voltage power from the LV DC/DC converter 510, directed to the pump by a low voltage bus 515 within the power sub-system 500. The coolant exiting the pump is then circulated through one or more coolant channels within the FC stack 100, such that heat generated in the FC stack 100 is transferred to the coolant, before flowing out of the FC stack 100 to a stack discharge line 345 that extends from the FC stack 100 to a first valve inlet 316 of a first multi-outlet valve arrangement 315. Thus, heat is transferred out of the FC stack 100 and into the cooling sub-system 300.

The first multi-outlet valve arrangement 315 forms part of a valve network and comprises a first valve outlet 317 and a second valve outlet 318 in addition to the first valve inlet 316. Although the first multi-outlet valve arrangement 315 illustrated in Figure 1 takes the form of a three-port valve, the skilled person can appreciate that a range of valve layouts can provide the first multi-outlet valve arrangement 315. A first recycle line 330 extends from the first valve outlet 317 to the coolant tank 305, thus defining a closed loop within the cooling sub-system 300 in which coolant pumped around the system from the coolant tank 305 can be recycled back to the coolant tank 305. A first side of a coolant heat exchanger (HEX) 320 is disposed on the first recycle line 330 to remove heat from the coolant recycled therethrough.

The coolant HEX 320 is used to reject low-quality heat transferred into the coolant within the FC stack 100 to the surroundings, such that the coolant flowing through the first recycle line 330 downstream of the coolant HEX 320 has a lower temperature than when it exited the FC stack 100 into the stack discharge line 345, allowing the coolant to be recycled around the closed loop and back into the FC stack 100 to transfer more heat out of the FC stack 100. Typically, the coolant HEX 320 is an air-cooled HEX, a second side of the coolant heat exchanger being exposed to an external airflow which receives heat from the coolant (i.e. the HEX is a radiator). Accordingly, ventilation may be provided to the FC system 1 to increase the achievable heat duty across the coolant HEX 320 by maintaining a large temperature difference between the air surrounding the coolant HEX 320 and the coolant flowing through the coolant HEX 320, and increasing the heat transfer coefficient of the coolant HEX 320.

The achievable heat duty across the coolant HEX 320 is a strong function of both the heat transfer area of the coolant HEX 320 and the temperature difference between the fluids on either side of the coolant HEX 320. In an aircraft context, and in a cooling sub-system that is only configured to operate as a closed loop cooling sub-system, the heat transfer area of the coolant HEX must be large enough to provide a heat duty across the coolant HEX that reduces the temperature of the coolant sufficiently to allow the cooling sub-system to provide the required cooling to the FC stack when the FC system is operating at Hot Day MTOW conditions. However, for most of the FC system's operational time, the FC stack will be operating away from these conditions.

Accordingly, the coolant HEXs in conventional cooling sub-systems are typically much larger, heavier and more expensive than is necessary for the average operating conditions of the FC system they are part of.

In the present FC system 1, this problem of coolant HEX 320 sizing is addressed by providing a coolant exhaust 325 and an exhaust line 340 extending from the second valve outlet 318 to the coolant exhaust 325, allowing the cooling sub-system 300 to reject coolant out of the cooling sub-system 300 as exhaust fluid. Thus, in addition to the closed loop described above, the present cooling sub-system 300 is also provided with an open-vented configuration. In such a FC system 1, it is beneficial to use water as the coolant because ejection of water as an exhaust fluid is less environmentally damaging than the ejection of other possible coolants, such as petroleum-based fluids and fluorocarbons. The first multi-outlet valve arrangement 315 can be set in different states to control whether the cooling sub-system 300 operates as a purely closed-loop cooling sub-system, a purely open-vented cooling sub-system, or a combination of the two. The first multi-outlet valve arrangement 315 has a first state in which first valve outlet 317 is open, and the second valve outlet 318 is closed, providing a closed-loop cooling sub-system 300 in which a coolant path from the first multi-valve arrangement 315, through the coolant HEX 320 and to the coolant tank 305 is open and a coolant path from the first multi-valve arrangement 315 to the coolant exhaust 325 is closed. The first multi-outlet valve arrangement 315 also has a second state in which the first valve outlet 317 is closed, and the second valve outlet 318 is open, providing an open-vented cooling sub-system in which a coolant path from the first multi-valve arrangement 315 to the coolant exhaust 325 is open and a coolant path from the first multi-valve arrangement 315, through the coolant heat exchanger 320 and to the coolant tank 305 is closed.

As can be appreciated, operating the cooling sub-system 300 with the first multi-outlet valve arrangement 315 in the first state requires the achievable heat duty across the coolant HEX 320 to be large enough that the temperature reduction of the coolant across the coolant HEX 320 is adequate to allow the cooling sub-system 300 to provide the required heat duty to the FC stack 100. In contrast, operating the cooling sub-system 300 with the first multi-outlet valve arrangement 315 in the second state results in the coolant HEX 320 being bypassed, and the coolant exiting the FC stack 100 is not recycled to the coolant tank 305. Rather, the coolant exiting the FC stack 100 is ejected from the cooling sub-system 300 and there is no requirement to reject the low-grade heat such coolant absorbed from the FC stack 100 to the surroundings via the coolant HEX 320.

The cooling sub-system 300 further comprises a computer-based controller 395 configured to control the valve network to switch the first multi-outlet valve arrangement 315 between the first state and the second state. The controller 395 is configured to conduct such switching on the basis of a balance between a required heat duty of the cooling sub-system 300 across the FC stack 100 and an achievable heat duty of the cooling sub-system 300 across the coolant HEX 320.

The cooling sub-system 300 is therefore able to have a coolant HEX 320 sized away from Hot Day MTOW conditions and still provide the FC stack 100 with the cooling heat duty required at Hot Day MTOW conditions, or conditions approaching Hot Day MTOW conditions, by operating with the first multi-outlet valve arrangement in the second state, in which coolant exiting the FC stack 100 is ejected from the cooling system 300 via the coolant exhaust 325. When the conditions are such that the coolant HEX 320 is able to provide a heat duty across it that allows the cooling subsystem 300 to operate as a closed-loop cooling sub system (i.e. conditions are sufficiently far from Hot Day MTOW conditions, based on the achievable heat duty across the coolant HEX 320 and the required heat duty across the FC stack 100), the controller 395 can switch the first multi-outlet valve arrangement 315 to the first state and stop ejecting coolant from the cooling sub-system 300.

Switching the first multi-outlet valve arrangement 315 from the second state to the first state when the balance between the required heat duty of the cooling sub-system 300 across the FC stack 100 and the achievable heat duty across of the cooling subsystem 300 across the coolant HEX 320 allows is beneficial in reducing the amount of coolant ejected from the cooling sub-system 300. This may be particularly important in the case that the coolant volume within the coolant tank 305 cannot be readily topped up when the FC system 1 is in operation, and/or the coolant volume within the coolant tank 305 is only sufficient for operating the cooling sub-system 300 as an open-vented cooling sub-system for a certain amount of time before there is insufficient coolant within the cooling sub-system 300 for the cooling sub-system 300 to provide sufficient cooling heat duty to the FC stack 100.

The controller 395 is typically configured to switch the first multi-outlet valve arrangement 315 from the first state to the second state in response to an increase in the required heat duty of the cooling sub-system 300 across the FC stack 100 and/or a decrease in the achievable heat duty of the cooling sub-system 300 across the coolant heat exchanger 320. For example, if the power of the FC stack 100 is increased, if the ambient air temperature increases, or if the volume of air ventilating the FC system 1 decreases, the controller 395 may switch the first multi-outlet valve arrangement 315 from the first state to the second state. Similarly, the controller 395 is typically configured to switch the first multi-outlet valve arrangement 315 from the second state to the first state in response to a decrease in the required heat duty of the cooling subsystem 300 across the FC stack 100 and/or an increase in the achievable heat duty of the cooling sub-system 300 across the coolant heat exchanger 320. For example, if the power of the FC stack 100 is decreased, if the ambient air temperature decreases, or if the volume of air ventilating the FC system 1 increases, the controller 395 may switch the first multi-outlet valve arrangement 315 from the second state to the first state.

It can be appreciated that it may also be desirable to operate the cooling sub-system 300 under an operating condition wherein a portion of the coolant flowing into the first multi-outlet valve arrangement 315 is recycled to the coolant tank 305 in the first recycle line 330 via the coolant HEX 320 and the remaining portion of such coolant flows into the exhaust line 340 to be ejected from the cooling sub-system 300. Accordingly, the controller 395 may be configured to set the first multi-outlet valve arrangement 315 to a third state in which both the first valve outlet 317 and second valve outlet 318 are open. An ability to set the first multi-outlet valve arrangement 315 in this state may be desirable as it may allow the amount of coolant ejected from the cooling sub-system 300 to be reduced. This is because when transitioning from an open-vented cooling sub-system to a closed-loop cooling sub-system, the recycling of some of the coolant can be initiated prior to the point where the achievable heat duty across the coolant HEX 320 is large enough for all of the coolant to be recycled whilst still meeting the required heat duty of the cooling sub-system 300 across the FC stack 100.

Such an FC system 1 can thus comprise a coolant HEX 320 that is substantially smaller and lighter than would otherwise be required if the cooling sub-system 300 was not provided with the ability to switch between a closed-loop cooling sub-system and an open-vented cooling sub-system. The reduction in coolant HEX 320 size, weight and cost made possible is particularly beneficial when the FC system 1 forms part of a propulsion device where the power generated by the FC is used to supply electrical power generated by the FC stack 100 to an electrically powered propulsor 800, typically via the HV power output provided by the HV DC/DC converter 505. In this case the power-to-weight ratio and power-to-CdA ratio of a vehicle such a propulsion device is used can be increased, and thus its fuel efficiency can be improved. The increase in these ratios is particularly beneficial in the case of the propulsion device being used in an aircraft.

The cooling sub-system 300 of the FC system 1 in Figure 1 further typically comprises a gas-pre-conditioning line 370 that can be used to pre-cool the compressed air and/or pre-condition the fuel stream entering the FC stack 100. The valve network further comprises a second multi-outlet valve arrangement 360 having a second valve inlet 361 and a fourth valve outlet 363 disposed on the stack feed line 340, and a first multi-inlet valve arrangement 365 disposed having a third valve inlet 366 and a fifth valve outlet 368 disposed on the stack discharge line 345. The gas-pre-conditioning line 370 then extends from a third valve outlet 362 of the second multi-outlet valve arrangement 360 to a fourth valve inlet 367 of the first multi-inlet valve arrangement 365.

Although the second multi-outlet valve arrangement 360 and the first multi-inlet valve arrangement 365 illustrated in Figure 1 each take the form of a three-port valve, the skilled person can appreciate that a range of valve layouts can provide each of the second multi-outlet valve arrangement 360 and first multi-inlet valve arrangement 365.

In order for the compressed air entering the FC stack 100 to be pre-cooled by coolant flowing through the gas-pre-conditioning line 370 line, a first side of a cathode-side HEX 230 is disposed on the air feed line 216, and a second side of the cathode-side HEX 230 is disposed on the gas-pre-conditioning line 370 between the third valve outlet 362 and the fourth valve inlet 367. Typically, the cathode-side HEX is positioned as illustrated in Figure 1: between the outlet of the compressor 210 and the humidifier 215. The cathode-side HEX is used to regulate the temperature of the air feed and also helps maintain the appropriate humidity level in the air feed.

Similarly, in order for the fuel stream entering the FC stack 100 to be pre-conditioned by coolant flowing through the gas-pre-conditioning line 370 line, a first side of an anode-side HEX 415 is disposed on the fuel feed line 401, and a second side of the anode-side HEX 415 is disposed on the gas-pre-condition line 370.

The controller 395 is configured to control the second multi-outlet valve arrangement 360 and the first multi-inlet valve arrangement 365 to switch the second multi-outlet valve arrangement 360 and the first multi-inlet valve arrangement 365 between an open state in which the third valve outlet 362 and the fourth valve inlet 367 are open to open a coolant path through the gas-pre-conditioning line 370, and a closed state in which the third valve outlet 362 and the fourth valve inlet (367) are closed to close the coolant path through the gas-pre-conditioning line 370.

The controller 395 may also be configured to control the degree to which the third valve outlet 362 and/or the fourth valve inlet 367 are opened, in turn altering the flowrate of coolant through the gas-pre- conditioning line 370 and thus the degree of pre-cooling of the compressed air and the fuel stream. The controller 395 is configured to change the state of the second multi-outlet valve arrangement 360 and the first multi-inlet valve arrangement 365 on the basis of a balance between two or more of:
- the required heat duty of the cooling sub-system (300) across the fuel cell stack (100);
- the achievable heat duty of the cooling sub-system (300) across the coolant heat exchanger (320); and
- the desired degree of pre-conditioning of the compressed air and the fuel stream.

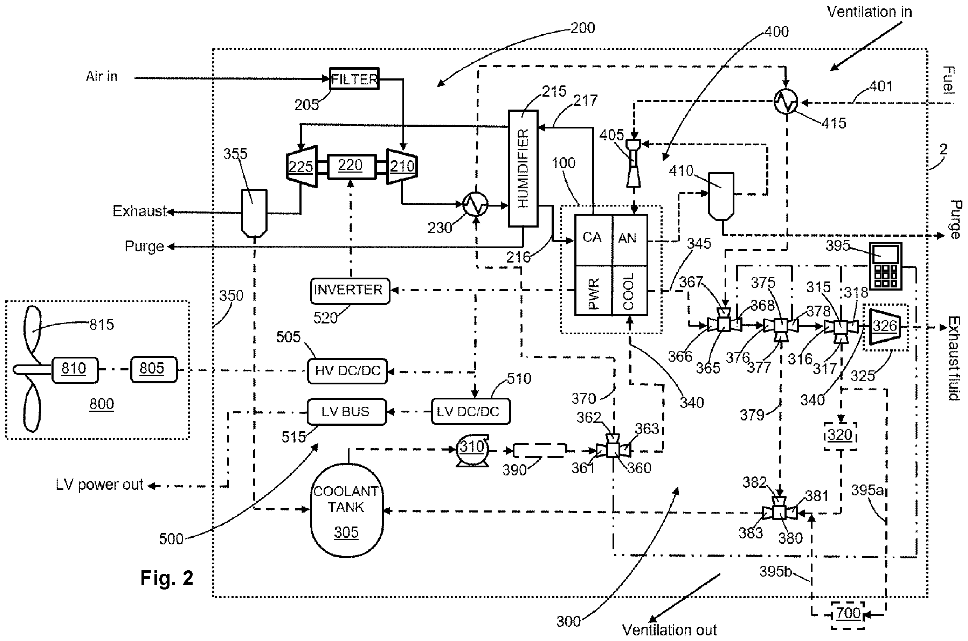

Although both a cathode-side HEX 230 and an anode-side HEX 415 are present in Figure 2, it can be appreciated that either could be present without the other, and accordingly coolant could be used to pre-cool just one of the compressed air and fuel stream via the gas-pre-conditioning line 370. It may also be desirable to have independent control of the flowrate of coolant through each of the cathode-side HEX 230 and the anode-side HEX 415, so that the degree of pre-cooling of each of the compressed air and fuel stream is individually controllable; thus, the cathode-side HEX 230 and anode-side HEX 415 could be provided on separate gas-pre-conditioning lines, for example, or respective independently operable by-passes to the HEXs 230, 415 could be provided.

The cooling sub-system 300 in Figure 1 also typically contains a deioniser 390 for deionising the coolant entering the FC stack 100. The deioniser 390 is disposed on the stack feed line 340 in the cooling sub-system 300 illustrated in Figure 1, but it could be located elsewhere within the cooling sub-system 300 (for example, on another line within the closed loop, or on the second recycle line 350, if present).

Having the deioniser 390 disposed on the stack feed line 340 is beneficial in that the coolant will necessarily pass through the deioniser 390 prior to flowing into the FC stack 100, reducing the coolant's concentration of ions which have formed within the cooling sub-system 300 (through leaching, degradation corrosion, etc.) prior to the coolant entering the FC stack 100. It is desirable to deionise the coolant to reduce the risk of current leakage and short circuits within the FC stack 100.

Figure 2 illustrates a variant process flow diagram including an FC system 2 that implements several optional modifications to the FC system 1 illustrated in Figure 1 and discussed above.

The FC system 2 of Figure 2 operates in general in the same way as that of Figure 1. Thus, we focus in the following on the various modifications present in the FC system 2.

Firstly, the cooling sub-system 300 in Figure 2 is configured to allow water to be recovered from exhaust gases of the cathode-side sub-system 200 and for this recovered water to be recycled into the cooling sub-system 300. For example, a water separation unit 355 is disposed on an air exhaust line exiting the turbine 225 of the cathode-side sub-system 200 configured to remove air from the fuel cell stack 100. The water separation unit 355 is configured to collect water from the air removed from the fuel cell stack 100. A second recycle line 350 extends from the water separation unit 355 to the coolant tank 305 to send the collected water to the coolant tank 305. Advantageously, such a cooling sub-system 300 (ideally when using water as a coolant), can compensate for at least some of the volume of coolant ejected from the cooling sub-system 300 when the cooling sub-system operates as an open-vented cooling sub-system with the first multi-outlet valve arrangement in the second state by replenishing the coolant in the cooling sub-system 300 with water via the second recycle line 350. An ability to replenish the coolant whilst the FC system 2 is operating is beneficial when it is anticipated that the cooling sub-system 300 will need to be operated as an open-vented cooling sub-system. This is because the ability to replenish the coolant means that the volume of coolant contained within the cooling sub-system 300 when the FC system 2 begins operating can be smaller than it would otherwise need to be in order to cope with operating as an open-vented cooling subsystem. Accordingly, the coolant tank 305 can also be made smaller than it would otherwise need to be, because it does not need to store as great a volume of coolant. Accordingly, the cooling sub-system 300, and the FC system 2 as a whole, can be made smaller and lighter, and the size, mass and cost of the coolant tank 305 can be reduced.

The cooling sub-system 300 in Figure 2 also contains the deioniser 390 for deionising the coolant entering the FC stack 100. The deioniser 390 is particularly useful when the FC system 2 comprises the water separation unit 355 and the second recycle line 350. This is because the water introduced into the cooling sub-system 300 by the second recycle line 350 is liable to having a high concentration of ions that are preferably not introduced into the coolant channels of the FC stack 100. The deioniser 390 is disposed on the stack feed line 340 in the cooling sub-system 300 illustrated in Figure 2, but it could be located elsewhere within the cooling sub-system 300 (for example, on another line within the closed loop, or on the second recycle line 350, if present). Having the deioniser 390 disposed on the stack feed line 340 is beneficial in that water recovered from the water separation unit 355 and introduced into the cooling sub-system 300 will necessarily pass through the deioniser 390 prior to flowing into the FC stack 100, ensuring the water is deionised prior to entering the FC stack 100. It is desirable to deionise the coolant to reduce the risk of current leakage and short circuits within the FC stack 100.

Another modification present in the cooling sub-system 300 in Figure 2 is the presence of a HEX bypass line 379 that allows coolant to flow around a closed loop of the cooling sub-system 300 whilst also bypassing the coolant HEX 320. The HEX bypass line 379 in Figure 2 extends from the stack discharge line 345 to a position on the first recycle line 330 downstream of the coolant HEX 320, but it could alternatively extend from the exhaust line 340 to a position on the first recycle line 330 downstream of the coolant HEX 320. The controller 395 is further configured to open or close the HEX bypass line on the basis of a balance between the required heat duty of the cooling sub-system 300 across the fuel cell stack 100 and the achievable heat duty of the cooling sub-system 300 across the coolant heat exchanger 320. Typically, the controller 395 is further configured to close the heat exchanger bypass line 379 when the first multi-outlet valve arrangement 315 is switched to the second state.

In Figure 2, the HEX bypass line 379 is provided by the coolant sub-system 300 further comprising a third multi-outlet valve arrangement 375 having a fifth valve inlet 376, a sixth valve outlet 377 and a seventh valve outlet 378; and a second multi-inlet valve arrangement 380 having a sixth valve inlet 381, a seventh valve inlet 382 and an eighth valve outlet 383. The fifth valve inlet 376 and seventh valve outlet 378 are disposed on the stack discharge line 345 and the sixth valve inlet 381 and eighth valve outlet 383 are disposed on the first recycle line 330. The HEX bypass line 379 extends from the sixth valve outlet 377 to the seventh valve inlet 382. Although the third multi-outlet valve arrangement 375 and second multi-inlet valve arrangement 380 illustrated in Figure 2 each take the form of a three-port valve, the skilled person can appreciate that a range of valve layouts can provide each of the third multi-outlet valve arrangement 375 and second multi-inlet valve arrangement 380. When the cooling sub-system 300 is operating as a closed-loop cooling sub-system, the controller 395 is configured to switch the third multi-outlet valve arrangement 375 and the second multi-inlet valve arrangement 380 between a bypass state, in which the HEX bypass line 379 is open and coolant is prevented from flowing through the first recycle line from the first multi-outlet valve arrangement, through the coolant HEX 320 and into the coolant tank 305, and a non-bypass state, in which the HEX bypass line 379 is closed and coolant can flow through the first recycle line from the first multi-outlet valve arrangement, through the coolant HEX 320 and into the coolant tank 305.

In the arrangement illustrated in Figure 2, the bypass state may be provided by setting:
- the fifth valve inlet 376, the sixth valve outlet 377, the seventh valve inlet 382 and the eighth valve outlet 383 to open, and
- one of the seventh valve outlet 378, the first valve inlet 316, the first valve outlet 317 and the sixth valve inlet 381 to closed,
and the non-bypass state may be provided by setting:
- the fifth valve inlet 376, the seventh valve outlet 378, the first valve inlet 316, the first valve outlet 317, the sixth valve inlet 318 and the eighth valve outlet 383 to open to open, and
- one of the sixth valve outlet 377 and the seventh valve outlet 382 to closed.

In the case that the fifth valve inlet 376 and seventh valve outlet 378 are disposed on the exhaust line 340 such that the HEX bypass line 379 extends from the exhaust line 340, the bypass state may be provided by setting:
- the first valve inlet 316, the second valve outlet 318, the fifth valve inlet 376, the sixth valve outlet 377, seventh valve inlet 382 and the eighth valve outlet 383 to open, and
- one of the first valve outlet 317 and the sixth valve inlet 381 to closed,
and the non-bypass state may be provided by setting:
- the first valve inlet 316, the first valve outlet 317, the sixth valve inlet 381 and the eighth valve outlet 383 to open, and
- one of the fifth valve inlet 376, the sixth valve outlet 377 and the seventh valve inlet 382 to closed.

It can be appreciated that it may also be desirable to operate the cooling sub-system 300 such that a portion of the coolant flowing into the third multi-outlet valve arrangement 375 flows into the HEX bypass line 379 and the remaining portion of such coolant flows into the coolant HEX 320. Accordingly, the controller 395 may be configured to set the third multi-outlet valve arrangement 375 and second multi-inlet valve arrangement 380 such that both a coolant path through the HEX bypass line 379 and a coolant path through the coolant HEX 320 are open.

When the cooling sub-system is operating as an open-vented sub-system 300, the controller is configured to set the third multi-outlet valve arrangement 375 and the second multi-inlet valve arrangement 380 such that the bypass line 379 is closed and the exhaust line is open between the first multi-outlet valve arrangement 315 and the exhaust 325.

A further feature of the cooling sub-system 300 present in Figure 2 is that the exhaust 325 through which the coolant is ejected from the cooling sub-system 300 under the second operating condition comprises an exhaust nozzle 326. This may assist the cooling sub-system 300 in ensuring that coolant travelling down the exhaust line 340 is ejected from the cooling sub-system 300.

An additional modification of the cooling sub-system 300 present in Figure 2 is an anti-icing cooling circuit 395a, 395b extending from and returning to the first recycle line 330. The anti-icing cooling circuit is configured to carry coolant heated by the FC stack 100 to ice protection systems 700 of an aircraft via an outgoing part of the circuit 395a, the heated coolant thereby loosing heat to provide aircraft ice protection. The coolant then returns from the ice protection systems 700 to the first recycle line 330 via an incoming part of the circuit 395b. The ice protection system 700 is effectively an additional HEX connected in parallel with the coolant HEX 320. Such an arrangement may allow the coolant sub-system 300 to be provided with additional coolant cooling capacity beyond that provided by the coolant HEX 320, and for the heat extracted from the coolant flowing through the ice protection system 700 to be utilised rather than merely rejected to the environment. Vehicles such as aircraft typically comprise anti-icing systems 700 to melt ice from, and/or prevent ice forming on, external surfaces. Thus, the efficiency of a vehicle with such an FC system 2 having an anti-icing cooling circuit can be improved by utilising the heat transferred to the coolant in this way. Although Figure 2 illustrates the anti-icing system 700 being connected in parallel to the coolant HEX 320, it can be appreciated that similar benefits could be realised by other connection arrangements for the anti-icing system 700, for example, in series with the coolant HEX 320.

Finally, the process flow diagram in Figure 2 illustrates an electrically powered propulsor 800 comprising an inverter 805, a motor 810 and a propeller 815 for an aircraft. High voltage DC power is provided to the inverter 805 from the HV DC/DC converter 515. The inverter 805 in turn provides AC power to the motor 810 to drive the propeller 815.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A fuel cell system (1, 2) comprising:
a fuel cell stack (100); and
a cooling sub-system (300) comprising:
a coolant tank (305);
a stack feed line (340) extending from the coolant tank (305) to the fuel cell stack (100), a pump (310) being disposed on the stack feed line (340) to pump coolant therethrough from the tank (305) to the fuel cell stack (100);
a valve network including a first multi-outlet valve arrangement (315) having a first valve inlet (316), a first valve outlet (317), and a second valve outlet (318);
a coolant heat exchanger (320);
a coolant exhaust (325);
a stack discharge line (345) extending from the fuel cell stack (100) to the first valve inlet (316) for removing coolant from the fuel cell stack (100);
a first recycle line (330) extending from the first valve outlet (317) to the coolant tank (305), a first side of the coolant heat exchanger (320) being disposed on the first recycle line (330) to remove heat from the coolant recycled therethrough; and
an exhaust line (340) extending from the second valve outlet (318) to the coolant exhaust (325);
wherein the first multi-outlet valve arrangement (315) has:
a first state in which first valve outlet (317) is open, and the second valve outlet (318) is closed, providing a closed-loop cooling sub-system in which a coolant path from the first multi-valve arrangement (315), through the coolant heat exchanger (320) to the coolant tank (305) is open, and a coolant path from the first multi-valve arrangement (315) to the coolant exhaust (325) is closed; and
a second state in which the first valve outlet (317) is closed, and the second valve outlet (318) is open, providing an open-vented cooling sub-system in which the coolant path from the first multi-valve arrangement (315) to the coolant exhaust (325) is open, and the coolant path from the first multi-valve arrangement (315), through the coolant heat exchanger (325) to the coolant tank (305) is closed;
and wherein the cooling sub-system (300) further comprises a computer-based controller (395) configured to control the valve network to switch the first multi-outlet valve arrangement (315) between the first state and the second state on the basis of a balance between a required heat duty of the cooling sub-system (300) across the fuel cell stack (100) and an achievable heat duty of the cooling sub-system (300) across the coolant heat exchanger (320).

2. The fuel cell system (1, 2) according to claim 1, wherein the controller (395) is further configured to:
switch the first multi-outlet valve arrangement (315) from the first state to the second state in response to an increase in the required heat duty of the cooling sub-system (300) across the fuel cell stack (100) and/or a decrease in the achievable heat duty of the cooling sub-system (300) across the coolant heat exchanger (320); and
switch the first multi-outlet valve arrangement (315) from the second state to the first state in response to a decrease in the required heat duty of the cooling sub-system (300) across the fuel cell stack (100) and/or an increase in the achievable heat duty of the cooling sub-system (300) across the coolant heat exchanger (320).

3. The fuel cell system (1, 2) according to claim 1 or claim 2, wherein the cooling sub-system (300) is configured to use water as the coolant.

4. The fuel cell system (1, 2) according to any preceding claim further comprising:
a cathode sub-system (200) which comprises an air feed line (216) configured to feed air to the fuel cell stack (100), and an air exhaust line (217) configured to remove air from the fuel cell stack (100); and
an anode-side sub-system (400) which comprises a fuel feed line (401) configured to feed fuel to the fuel cell stack (100).

5. The fuel cell system (1, 2) according to claim 4, wherein:
the cooling sub-system (300) further comprises a second recycle line (350) and a water separation unit (355) disposed on the air exhaust line (217) to collect water from the air removed from the fuel cell stack (100); and
the second recycle line (350) extends from the water separation unit (355) to the coolant tank (305) to send the collected water to the coolant tank (305).

6. The fuel cell system (1, 2) according to claim 4 or 5, wherein:
(i) the valve network further comprises:
a second multi-outlet valve arrangement (360) having a second valve inlet (361), a third valve outlet (362) and a fourth valve outlet (363), the second valve inlet (361) and fourth valve outlet (363) being disposed on the stack feed line (340); and
a first multi-inlet valve arrangement (365) having a third valve inlet (366), a fourth valve inlet (367) and a fifth valve outlet (368), the third valve inlet (366) and the fifth valve outlet (368) being disposed on the stack discharge line (345);
(ii) the cooling sub-system (300) further comprises a gas-pre-conditioning line (370) extending from the third valve outlet (362) to the fourth valve inlet (367); the controller (395) is further configured to control the valve network to switch the second multi-outlet valve arrangement (360) and the first multi-inlet valve arrangement (365) between an open state in which the third valve outlet (362) and the fourth valve inlet (367) are open to open a coolant path through the gas-pre-conditioning line (370), and a closed state in which the third valve outlet (362) and the fourth valve inlet (367) are closed to close the coolant path through the gas-pre-conditioning line (370);
(iii) (A) the cathode-side sub-system (200) further comprises a cathode-side heat-exchanger (230), a first side of the cathode-side heat-exchanger (230)being disposed on the air feed line (216), and a second side of the cathode-side heat exchanger (230) being disposed on the gas-pre-conditioning line (370) between the third valve outlet (362) and the fourth valve inlet (367), and/or (B) the anode-side sub-system (400) further comprises an anode-side heat-exchanger (415), a first side of the anode-side heat-exchanger (415) being disposed on the fuel feed line (401), and a second side of the anode-side heat exchanger (415) being disposed on the gas-pre-conditioning line (370) between the third valve outlet (362) and the fourth valve inlet (367); and
(iv) the controller (395) is further configured to open or close the gas-pre-conditioning line (370) on the basis of a balance between two or more of:
(a) the required heat duty of the cooling sub-system (300) across the fuel cell stack (100);
(b) the achievable heat duty of the cooling sub-system (300) across the coolant heat exchanger (320); and
(c) the desired conditioning of the compressed air and/or the fuel stream.

7. The fuel cell system (1, 2) according to any preceding claim, wherein the cooling sub-system (300) further comprises a deioniser (390) for the coolant, and optionally the deioniser (390) is disposed on the stack feed line (340).

8. The fuel cell system (1, 2) according to any preceding claim, wherein
(a) the cooling sub-system (300) further comprises a heat exchanger bypass line (379) extending from the stack discharge line (345) or the exhaust line (340) to a position on the first recycle line (330) downstream of the coolant heat exchanger (320); and
(b) the controller (395) is further configured to open or close the heat exchanger bypass line (379) on the basis of a balance between the required heat duty of the cooling sub-system (300) across the fuel cell stack (100) and the achievable heat duty of the cooling sub-system (300) across the coolant heat exchanger (320); and optionally
(c) the controller (395) is further configured to close the heat exchanger bypass line (379) when the first multi-outlet valve arrangement (315) is switched to the second state.

9. The fuel cell system (1, 2) according to any preceding claim, wherein the cooling sub-system (300) further comprises an anti-icing coolant circuit (395a, 395b) extending from and returning to the first recycle line (330), the anti-icing coolant circuit (395a, 395b) being configured to carry coolant heated by the fuel cell stack (100) to ice protection systems (700) of an aircraft, the heated coolant thereby losing heat to provide aircraft ice protection before returning to the first recycle line(330), and optionally wherein the anti-icing coolant circuit (395a, 395b) is connected to the first recycle line (330) in parallel to the coolant heat exchanger (320).

10. The fuel cell system (1, 2) according to any preceding claim, wherein the coolant exhaust (325) comprises a exhaust nozzle (326).

11. The fuel cell system (1, 2) according to any preceding claim, wherein either:
(a) the fuel cell stack (100) comprises a plurality of proton-exchange membrane fuel cells; or
(b) the fuel cell stack (100) is a hydrogen fuel cell stack.

12. The fuel-cell system (1, 2) according to any preceding claim, wherein the coolant heat exchanger (320) is an air-cooled heat exchanger, a second side of the coolant heat exchanger being exposed to an external airflow which receives heat from the coolant.

13. A propulsion device comprising a fuel cell system according to any preceding claim, and an electrically powered propulsor (800); wherein:
(a) the fuel cell system further comprises a power sub-system (500) which harvests electrical power generated by the fuel cell stack (100); and
(b) the power sub-system (500) is electrically connected to the propulsor (800) to supply the propulsor (800) with the generated electrical power.

14. An aircraft comprising a propulsion device according to claim 13.

15. A method of operating a fuel cell system (1, 2) according to any of claims 1 to 12, the method comprising the steps of:
(a) operating the cooling sub-system (300) as a closed-loop cooling subsystem, in which the coolant path from the first multi-valve arrangement (315), through the coolant heat exchanger (320) to the coolant tank (305) is open, and the coolant path from the first multi-valve arrangement (315) to the coolant exhaust (325) is closed, by switching the first multi-outlet valve arrangement (315) to the first state; and
(b) operating the cooling sub-system (300) as an open-vented cooling subsystem, in which the coolant path from the first multi-valve arrangement (315) to the coolant exhaust (325) is open, and the coolant path from the first multi-valve arrangement (315), through the coolant heat exchanger (320) to the coolant tank (305) is closed, by switching the first multi-outlet valve arrangement (315) to the second state;
wherein switching the first multi-outlet valve arrangement (315) between the first state and the second state is dependent on the required heat duty of the cooling sub-system (300) across the fuel cell stack (100) and the achievable heat duty of the cooling sub-system (300) across the coolant heat exchanger (320).

## Patentansprüche

1. Brennstoffzellensystem (1, 2), umfassend:
einen Brennstoffzellenstapel (100); und
ein Kühlsubsystem (300), das Folgendes umfasst:
einen Kühlmitteltank (305);
eine Stapelzufuhrleitung (340), die sich von dem Kühlmitteltank (305) zu dem Brennstoffzellenstapel (100) erstreckt, wobei eine Pumpe (310) an der Stapelzufuhrleitung (340) angeordnet ist, um Kühlmittel dadurch von dem Tank (305) zu dem Brennstoffzellenstapel (100) zu pumpen;
ein Ventilnetzwerk, das eine erste Mehrfachauslassventilanordnung (315) mit einem ersten Ventileinlass (316), einem ersten Ventilauslass (317) und einem zweiten Ventilauslass (318) beinhaltet;
einen Kühlmittelwärmetauscher (320);
einen Kühlmittelabzug (325);
eine Stapelabgabeleitung (345), die sich von dem Brennstoffzellenstapel (100) zu dem ersten Ventileinlass (316) erstreckt, um Kühlmittel von dem Brennstoffzellenstapel (100) zu entfernen;
eine erste Rückführleitung (330), die sich von dem ersten Ventilauslass (317) zu dem Kühlmitteltank (305) erstreckt, wobei eine erste Seite des Kühlmittelwärmetauschers (320) an der ersten Rückführleitung (330) angeordnet ist, um Wärme von dem Kühlmittel, das dadurch rückgeführt wird, zu entfernen; und
eine Abzugsleitung (340), die sich von dem zweiten Ventilauslass (318) zu dem Kühlmittelabzug (325) erstreckt;
wobei die erste Mehrfachauslassventilanordnung (315) Folgendes aufweist:
einen ersten Zustand, in dem der erste Ventilauslass (317) offen ist und der zweite Ventilauslass (318) geschlossen ist, wodurch ein Kühlsubsystem mit geschlossener Schleife bereitgestellt wird, in dem ein Kühlmittelweg von der ersten Mehrfachventilanordnung (315) durch den Kühlmittelwärmetauscher (320) zu dem Kühlmitteltank (305) offen ist und ein Kühlmittelweg von der ersten Mehrfachventilanordnung (315) zu dem Kühlmittelabzug (325) geschlossen ist; und
einen zweiten Zustand, in dem der erste Ventilauslass (317) geschlossen ist und der zweite Ventilauslass (318) offen ist, wodurch ein Kühlsubsystem mit offener Entlüftung bereitgestellt wird, in dem der Kühlmittelweg von der ersten Mehrfachventilanordnung (315) zu dem Kühlmittelabzug (325) offen ist und der Kühlmittelweg von der ersten Mehrfachventilanordnung (315) durch den Kühlmittelwärmetauscher (325) zu dem Kühlmitteltank (305) geschlossen ist;
und wobei das Kühlsubsystem (300) ferner ein computerbasiertes Steuergerät (395) umfasst, das dazu konfiguriert ist, das Ventilnetzwerk zu steuern, um die erste Mehrfachauslassventilanordnung (315) zwischen dem ersten Zustand und dem zweiten Zustand basierend auf einem Gleichgewicht zwischen einer erforderlichen Wärmeleistung des Kühlsubsystems (300) über den Brennstoffzellenstapel (100) und einer erreichbaren Wärmeleistung des Kühlsubsystems (300) über den Kühlmittelwärmetauscher (320) umzuschalten.

2. Brennstoffzellensystem (1, 2) nach Anspruch 1, wobei das Steuergerät (395) ferner zu Folgendem konfiguriert ist:
Umschalten der ersten Mehrfachauslassventilanordnung (315) von dem ersten Zustand in den zweiten Zustand als Reaktion auf eine Erhöhung der erforderlichen Wärmeleistung des Kühlsubsystems (300) über den Brennstoffzellenstapel (100) und/oder eine Verringerung der erreichbaren Wärmeleistung des Kühlsubsystems (300) über den Kühlmittelwärmetauscher (320); und
Umschalten der ersten Mehrfachauslassventilanordnung (315) von dem zweiten Zustand in den ersten Zustand als Reaktion auf eine Verringerung der erforderlichen Wärmeleistung des Kühlsubsystems (300) über den Brennstoffzellenstapel (100) und/oder eine Erhöhung der erreichbaren Wärmeleistung des Kühlsubsystems (300) über den Kühlmittelwärmetauscher (320).

3. Brennstoffzellensystem (1, 2) nach Anspruch 1 oder Anspruch 2, wobei das Kühlsubsystem (300) dazu konfiguriert ist, Wasser als das Kühlmittel zu verwenden.

4. Brennstoffzellensystem (1, 2) nach einem vorhergehenden Anspruch, ferner umfassend: ein Kathodensubsystem (200), das eine Luftzufuhrleitung (216), die dazu konfiguriert ist, dem Brennstoffzellenstapel (100) Luft zuzuführen, und eine Luftabzugsleitung (217), die dazu konfiguriert ist, Luft von dem Brennstoffzellenstapel (100) zu entfernen, umfasst; und
ein anodenseitiges Subsystem (400), das eine Brennstoffzufuhrleitung (401) umfasst, die dazu konfiguriert ist, dem Brennstoffzellenstapel (100) Brennstoff zuzuführen.

5. Brennstoffzellensystem (1, 2) nach Anspruch 4, wobei:
das Kühlsubsystem (300) ferner eine zweite Rückführleitung (350) und eine Wasserabscheideeinheit (355) umfasst, die an der Luftabzugsleitung (217) angeordnet ist, um Wasser aus der von dem Brennstoffzellenstapel (100) entfernten Luft zu sammeln; und
sich die zweite Rückführleitung (350) von der Wasserabscheideeinheit (355) zu dem Kühlmitteltank (305) erstreckt, um das gesammelte Wasser zu dem Kühlmitteltank (305) zu leiten.

6. Brennstoffzellensystem (1, 2) nach Anspruch 4 oder 5, wobei:
(i) das Ventilnetzwerk ferner Folgendes umfasst:
eine zweite Mehrfachauslassventilanordnung (360) mit einem zweiten Ventileinlass (361), einem dritten Ventilauslass (362) und einem vierten Ventilauslass (363), wobei der zweite Ventileinlass (361) und der vierte Ventilauslass (363) an der Stapelzufuhrleitung (340) angeordnet sind; und
eine erste Mehrfacheinlassventilanordnung (365) mit einem dritten Ventileinlass (366), einem vierten Ventileinlass (367) und einem fünften Ventilauslass (368), wobei der dritte Ventileinlass (366) und der fünfte Ventilauslass (368) an der Stapelabgabeleitung (345) angeordnet sind;
(ii) das Kühlsubsystem (300) ferner eine Gasvorkonditionierungsleitung (370) umfasst, die sich von dem dritten Ventilauslass (362) zu dem vierten Ventileinlass (367) erstreckt; das Steuergerät (395) ferner dazu konfiguriert ist, das Ventilnetzwerk zu steuern, um die zweite Mehrfachauslassventilanordnung (360) und die erste Mehrfacheinlassventilanordnung (365) zwischen einem offenen Zustand, in dem der dritte Ventilauslass (362) und der vierte Ventileinlass (367) offen sind, um einen Kühlmittelweg durch die Gasvorkonditionierungsleitung (370) zu öffnen, und einem geschlossenen Zustand, in dem der dritte Ventilauslass (362) und der vierte Ventileinlass (367) geschlossen sind, um den Kühlmittelweg durch die Gasvorkonditionierungsleitung (370) zu schließen, umzuschalten;
(iii) (A) das kathodenseitige Subsystem (200) ferner einen kathodenseitigen Wärmetauscher (230) umfasst, wobei eine erste Seite des kathodenseitigen Wärmetauschers (230) an der Luftzufuhrleitung (216) angeordnet ist und eine zweite Seite des kathodenseitigen Wärmetauschers (230) an der Gasvorkonditionungsleitung (370) zwischen dem dritten Ventilauslass (362) und dem vierten Ventileinlass (367) angeordnet ist, und/oder (B) das anodenseitige Subsystem (400) ferner einen anodenseitigen Wärmetauscher (415) umfasst, wobei eine erste Seite des anodenseitigen Wärmetauschers (415) an der Brennstoffzufuhrleitung (401) angeordnet ist und eine zweite Seite des anodenseitigen Wärmetauschers (415) an der Gasvorkonditionerungsleitung (370) zwischen dem dritten Ventilauslass (362) und dem vierten Ventileinlass (367) angeordnet ist; und
(iv) das Steuergerät (395) ferner dazu konfiguriert ist, die Gasvorkonditionierungsleitung (370) basierend auf einem Gleichgewicht zwischen zwei oder mehr von Folgenden zu öffnen oder zu schließen:
(a) der erforderlichen Wärmeleistung des Kühlsubsystems (300) über den Brennstoffzellenstapel (100);
(b) der erreichbaren Wärmeleistung des Kühlsubsystems (300) über den Kühlmittelwärmetauscher (320); und
(c) der gewünschten Konditionierung der Druckluft und/oder des Brennstoffstroms.

7. Brennstoffzellensystem (1, 2) nach einem vorhergehenden Anspruch, wobei das Kühlsubsystem (300) ferner einen Entionisierer (390) für das Kühlmittel umfasst und optional der Entionisierer (390) an der Stapelzufuhrleitung (340) angeordnet ist.

8. Brennstoffzellensystem (1, 2) nach einem vorhergehenden Anspruch, wobei
(a) das Kühlsubsystem (300) ferner eine Wärmetauscherumgehungsleitung (379) umfasst, die sich von der Stapelabgabeleitung (345) oder der Abzugsleitung (340) zu einer Position an der ersten Rückführleitung (330) stromabwärts des Kühlmittelwärmetauschers (320) erstreckt; und
(b) das Steuergerät (395) ferner dazu konfiguriert ist, die Wärmetauscherumgehungsleitung (379) basierend auf einem Gleichgewicht zwischen der erforderlichen Wärmeleistung des Kühlsubsystems (300) über den Brennstoffzellenstapel (100) und der erreichbaren Wärmeleistung des Kühlsubsystems (300) über den Kühlmittelwärmetauscher (320) zu öffnen oder zu schließen; und optional
(c) das Steuergerät (395) ferner dazu konfiguriert ist, die Wärmetauscherumgehungsleitung (379) zu schließen, wenn die erste Mehrfachauslassventilanordnung (315) in den zweiten Zustand umgeschaltet wird.

9. Brennstoffzellensystem (1, 2) nach einem vorhergehenden Anspruch, wobei das Kühlsubsystem (300) ferner einen Vereisungsschutz-Kühlmittelkreislauf (395a, 395b) umfasst, der sich von der ersten Rückführleitung (330) erstreckt und zu dieser zurückkehrt, wobei der Vereisungsschutz-Kühlmittelkreislauf (395a, 395b) dazu konfiguriert ist, von dem Brennstoffzellenstapel (100) erwärmtes Kühlmittel zu Eisschutzsystemen (700) eines Luftfahrzeugs zu führen, wobei das erwärmte Kühlmittel dadurch Wärme verliert, um einen Luftfahrzeug-Eisschutz bereitzustellen, bevor es zu der ersten Rückführleitung (330) zurückkehrt, und optional wobei der Vereisungsschutz-Kühlmittelkreislauf (395a, 395b) mit der ersten Rückführleitung (330) parallel zu dem Kühlmittelwärmetauscher (320) verbunden ist.

10. Brennstoffzellensystem (1, 2) nach einem vorhergehenden Anspruch, wobei der Kühlmittelabzug (325) eine Abzugdüse (326) umfasst.

11. Brennstoffzellensystem (1, 2) nach einem vorhergehenden Anspruch, wobei entweder:
(a) der Brennstoffzellenstapel (100) eine Vielzahl von Protonenaustausch-Membran-Brennstoffzellen umfasst; oder
(b) der Brennstoffzellenstapel (100) ein Wasserstoffbrennstoffzellenstapel ist.

12. Brennstoffzellensystem (1, 2) nach einem vorhergehenden Anspruch, wobei der Kühlmittelwärmetauscher (320) ein luftgekühlter Wärmetauscher ist, wobei eine zweite Seite des Kühlmittelwärmetauschers einem externen Luftstrom ausgesetzt ist, der Wärme von dem Kühlmittel aufnimmt.

13. Antriebsvorrichtung, umfassend ein Brennstoffzellensystem nach einem vorhergehenden Anspruch und einen elektrisch angetriebenen Antrieb (800); wobei:
(a) das Brennstoffzellensystem ferner ein Leistungssubsystem (500) umfasst, das elektrische Leistung sammelt, die durch den Brennstoffzellenstapel (100) erzeugt wird; und
(b) das Leistungssubsystem (500) elektrisch mit dem Antrieb (800) verbunden ist, um den Antrieb (800) mit der erzeugten elektrischen Leistung zu versorgen.

14. Luftfahrzeug, umfassend eine Antriebsvorrichtung nach Anspruch 13.

15. Verfahren zum Betreiben eines Brennstoffzellensystems (1, 2) nach einem der Ansprüche 1 bis 12, wobei das Verfahren die folgenden Schritte umfasst:
(a) Betreiben des Kühlsubsystems (300) als ein Kühlsubsystem mit geschlossener Schleife, in dem der Kühlmittelweg von der ersten Mehrfachventilanordnung (315) durch den Kühlmittelwärmetauscher (320) zu dem Kühlmitteltank (305) offen ist und der Kühlmittelweg von der ersten Mehrfachventilanordnung (315) zu dem Kühlmittelabzug (325) geschlossen ist, indem die erste Mehrfachauslassventilanordnung (315) in den ersten Zustand umgeschaltet wird; und
(b) Betreiben des Kühlsubsystems (300) als ein Kühlsubsystem mit offener Entlüftung, in dem der Kühlmittelweg von der ersten Mehrfachventilanordnung (315) zu dem Kühlmittelabzug (325) offen ist und der Kühlmittelweg von der ersten Mehrfachventilanordnung (315) durch den Kühlmittelwärmetauscher (320) zu dem Kühlmitteltank (305) geschlossen ist, indem die erste Mehrfachauslassventilanordnung (315) in den zweiten Zustand umgeschaltet wird;
wobei das Umschalten der ersten Mehrfachauslassventilanordnung (315) zwischen dem ersten Zustand und dem zweiten Zustand von der erforderlichen Wärmeleistung des Kühlsubsystems (300) über den Brennstoffzellenstapel (100) und der erreichbaren Wärmeleistung des Kühlsubsystems (300) über den Kühlmittelwärmetauscher (320) abhängig ist.

## Revendications

1. Système de pile à combustible (1, 2) comprenant :
un empilement de piles à combustible (100) ; et
un sous-système de refroidissement (300) comprenant :
un réservoir de fluide de refroidissement (305) ;
une conduite d'alimentation (340) d'empilement s'étendant à partir du réservoir de liquide de refroidissement (305) jusqu'à l'empilement de piles à combustible (100), une pompe (310) étant disposée sur la conduite d'alimentation (340) d'empilement pour pomper le fluide de refroidissement à travers celle-ci à partir du réservoir (305) jusqu'à l'empilement de piles à combustible (100) ;
un réseau de soupapes comprenant un premier agencement de soupape multisortie (315) comportant une première entrée de soupape (316), une première sortie de soupape (317) et une deuxième sortie de soupape (318) ;
un échangeur de chaleur à fluide de refroidissement (320) ;
un échappement (325) de fluide de refroidissement ;
une conduite de décharge (345) d'empilement s'étendant à partir de l'empilement de piles à combustible (100) jusqu'à la première entrée de soupape (316) pour retirer le fluide de refroidissement de l'empilement de piles à combustible (100) ;
une première conduite de recyclage (330) s'étendant à partir de la première sortie de soupape (317) jusqu'au réservoir de fluide de refroidissement (305), un premier côté de l'échangeur de chaleur à fluide de refroidissement (320) étant disposé sur la première conduite de recyclage (330) pour extraire la chaleur du fluide de refroidissement recyclé à travers celle-ci ; et
une conduite d'échappement (340) s'étendant à partir de la deuxième sortie de soupape (318) jusqu'à l'échappement de fluide de refroidissement (325) ;
ledit premier agencement de soupape multisortie (315) comportant :
un premier état dans lequel la première sortie de soupape (317) est ouverte, et la deuxième sortie de soupape (318) est fermée, fournissant un sous-système de refroidissement en boucle fermée dans lequel un trajet de fluide de refroidissement allant du premier agencement multisoupape (315), à travers l'échangeur de chaleur à fluide de refroidissement (320), jusqu'au réservoir de fluide de refroidissement (305) est ouvert, et un trajet de fluide de refroidissement allant du premier agencement multisoupape (315) jusqu'à l'échappement de fluide de refroidissement (325) est fermé ; et
un second état dans lequel la première sortie de soupape (317) est fermée et la deuxième sortie de soupape (318) est ouverte, fournissant un sous-système de refroidissement à ventilation ouverte dans lequel le trajet de fluide de refroidissement allant du premier agencement multisoupape (315) jusqu'à l'échappement de fluide de refroidissement (325) est ouvert et le trajet de fluide de refroidissement allant du premier agencement multisoupape (315), à travers l'échangeur de chaleur à fluide de refroidissement (325), jusqu'au réservoir de fluide de refroidissement (305) est fermé ;
et ledit sous-système de refroidissement (300) comprenant en outre un dispositif de commande informatique (395) conçu pour commander le réseau de soupapes afin de commuter le premier agencement de soupape multisortie (315) entre le premier état et le second état sur la base d'un équilibre entre une puissance thermique requise du sous-système de refroidissement (300) à travers l'empilement de piles à combustible (100) et une puissance thermique réalisable du sous-système de refroidissement (300) à travers l'échangeur de chaleur à fluide de refroidissement (320).

2. Système de pile à combustible (1, 2) selon la revendication 1, ledit dispositif de commande (395) étant conçu pour :
commuter le premier agencement de soupape multisortie (315) du premier état au second état en réponse à une augmentation de la puissance thermique requise du sous-système de refroidissement (300) à travers l'empilement de piles à combustible (100) et/ou à une diminution de la puissance thermique réalisable du sous-système de refroidissement (300) à travers l'échangeur de chaleur à fluide de refroidissement (320) ; et
commuter le premier agencement de soupape multisortie (315) du second état au premier état en réponse à une diminution de la puissance thermique requise du sous-système de refroidissement (300) à travers l'empilement de piles à combustible (100) et/ou à une augmentation de la puissance thermique réalisable du sous-système de refroidissement (300) à travers l'échangeur de chaleur à fluide de refroidissement (320).

3. Système de pile à combustible (1, 2) selon la revendication 1 ou la revendication 2, ledit sous-système de refroidissement (300) étant conçu pour utiliser de l'eau en tant que fluide de refroidissement.

4. Système de pile à combustible (1, 2) selon une quelconque revendication précédente, comprenant en outre : un sous-système de cathode (200) qui comprend une conduite d'alimentation en air (216) conçue pour alimenter en air l'empilement de piles à combustible (100), et une conduite d'échappement d'air (217) conçue pour extraire l'air de l'empilement de piles à combustible (100) ; et
un sous-système côté anode (400) qui comprend une conduite d'alimentation en combustible (401) conçue pour alimenter en combustible l'empilement de piles à combustible (100).

5. Système de pile à combustible (1, 2) selon la revendication 4,
ledit : sous-système de refroidissement (300) comprenant en outre une seconde conduite de recyclage (350) et une unité de séparation d'eau (355) disposée sur la conduite d'échappement d'air (217) pour collecter l'eau à partir de l'air retiré de l'empilement de piles à combustible (100) ; et
ladite seconde conduite de recyclage (350) s'étendant de l'unité de séparation d'eau (355) au réservoir de fluide de refroidissement (305) pour envoyer l'eau collectée au réservoir de fluide de refroidissement (305).

6. Système de pile à combustible (1, 2) selon la revendication 4 ou 5,
(i) ledit : réseau de soupapes comprenant en outre :
un second agencement de soupape multisortie (360) comportant une deuxième entrée de soupape (361), une troisième sortie de soupape (362) et une quatrième sortie de soupape (363), la deuxième entrée de soupape (361) et la quatrième sortie de soupape (363) étant disposées sur la conduite d'alimentation (340) d'empilement ; et
un premier agencement de soupape multientrée (365) comportant une troisième entrée de soupape (366), une quatrième entrée de soupape (367) et une cinquième sortie de soupape (368), la troisième entrée de soupape (366) et la cinquième sortie de soupape (368) étant disposées sur la conduite de décharge (345) d'empilement ;
(ii) ledit sous-système de refroidissement (300) comprenant en outre une conduite de préconditionnement de gaz (370) s'étendant à partir de la troisième sortie de soupape (362) jusqu'à la quatrième entrée de soupape (367) ; ledit dispositif de commande (395) étant en outre conçu pour commander le réseau de soupapes afin de commuter le second agencement de soupape multisortie (360) et le premier agencement de soupape multientrée (365) entre un état ouvert dans lequel la troisième sortie de soupape (362) et la quatrième entrée de soupape (367) sont ouvertes pour ouvrir un trajet de fluide de refroidissement à travers la conduite de préconditionnement de gaz (370), et un état fermé dans lequel la troisième sortie de soupape (362) et la quatrième entrée de soupape (367) sont fermées pour fermer le trajet de fluide de refroidissement à travers la conduite de préconditionnement de gaz (370) ;
(iii) (A) ledit sous-système côté cathode (200) comprenant en outre un échangeur de chaleur côté cathode (230), un premier côté de l'échangeur de chaleur côté cathode (230) étant disposé sur la conduite d'alimentation en air (216), et un second côté de l'échangeur de chaleur côté cathode (230) étant disposé sur la conduite de préconditionnement de gaz (370) entre la troisième sortie de soupape (362) et la quatrième entrée de soupape (367), et/ou (B) le sous-système côté anode (400) comprend en outre un échangeur de chaleur côté anode (415), un premier côté de l'échangeur de chaleur côté anode (415) étant disposé sur la conduite d'alimentation en combustible (401), et un second côté de l'échangeur de chaleur côté anode (415) étant disposé sur la conduite de préconditionnement de gaz (370) entre la troisième sortie de soupape (362) et la quatrième entrée de soupape (367) ; et
(iv) ledit dispositif de commande (395) étant conçu pour ouvrir ou fermer la conduite de préconditionnement de gaz (370) sur la base d'un équilibre entre deux ou plus parmi :
(a) la puissance thermique requise du sous-système de refroidissement (300) à travers l'empilement de piles à combustible (100) ;
(b) la puissance thermique réalisable du sous-système de refroidissement (300) à travers l'échangeur de chaleur à fluide de refroidissement (320) ; et
(c) le conditionnement souhaité de l'air comprimé et/ou du flux de combustible.

7. Système de pile à combustible (1, 2) selon une quelconque revendication précédente, ledit sous-système de refroidissement (300) comprenant en outre un déioniseur (390) pour le fluide de refroidissement et ledit déioniseur (390) étant éventuellement disposé sur la conduite d'alimentation (340) d'empilement.

8. Système de pile à combustible (1, 2) selon une quelconque revendication précédente,
(a) ledit sous-système de refroidissement (300) comprenant en outre une conduite de dérivation (379) de l'échangeur de chaleur s'étendant à partir de la conduite de décharge (345) d'empilement ou de la conduite d'échappement (340) jusqu'à une position sur la première conduite de recyclage (330) en aval de l'échangeur de chaleur à fluide de refroidissement (320) ; et
(b) ledit dispositif de commande (395) étant en outre conçu pour ouvrir ou fermer la conduite de dérivation (379) de l'échangeur de chaleur sur la base d'un équilibre entre la puissance thermique requise du sous-système de refroidissement (300) à travers l'empilement de piles à combustible (100) et la puissance thermique réalisable du sous-système de refroidissement (300) à travers l'échangeur de chaleur à fluide de refroidissement (320) ; et éventuellement
(c) ledit dispositif de commande (395) étant en outre conçu pour fermer la conduite de dérivation (379) de l'échangeur de chaleur lorsque ledit premier agencement de soupape multisortie (315) est commuté dans ledit second état.

9. Système de pile à combustible (1, 2) selon une quelconque revendication précédente, ledit sous-système de refroidissement (300) comprenant en outre un circuit de fluide de refroidissement antigivrant (395a, 395b) s'étendant à partir de la première conduite de recyclage (330) et revenant à celle-ci, ledit circuit de fluide de refroidissement antigivrant (395a, 395b) étant conçu pour transporter un fluide de refroidissement chauffé par l'empilement de piles à combustible (100) vers des systèmes de protection contre le givre (700) d'un aéronef, ledit fluide de refroidissement chauffé perdant ainsi de la chaleur pour fournir une protection d'aéronef contre le givre avant de retourner à la première conduite de recyclage (330), et ledit circuit de fluide de refroidissement antigivrant (395a, 395b) étant éventuellement raccordé à la première conduite de recyclage (330) en parallèle à l'échangeur de chaleur à fluide de refroidissement (320).

10. Système de pile à combustible (1, 2) selon une quelconque revendication précédente, ledit échappement de fluide de refroidissement (325) comprenant une buse d'échappement (326).

11. Système de pile à combustible (1, 2) selon une quelconque revendication précédente,
(a) ledit empilement de piles à combustible (100) comprenant une pluralité de piles à combustible à membrane échangeuse de protons ; ou
(b) ledit empilement de piles à combustible (100) étant un empilement de piles à combustible à hydrogène.

12. Système de pile à combustible (1, 2) selon une quelconque revendication précédente, ledit échangeur de chaleur à fluide de refroidissement (320) étant un échangeur de chaleur refroidi par air, un second côté de l'échangeur de chaleur à fluide de refroidissement étant exposé à un flux d'air externe qui reçoit de la chaleur en provenance du fluide de refroidissement.

13. Dispositif de propulsion comprenant un système de pile à combustible selon une quelconque revendication précédente, et un propulseur alimentée électriquement (800) ;
(a) ledit : système de pile à combustible comprenant en outre un sous-système d'alimentation (500) qui récolte l'énergie électrique générée par l'empilement de piles à combustible (100) ; et
(b) ledit sous-système d'alimentation (500) étant connecté électriquement au propulseur (800) pour alimenter le propulseur (800) avec l'énergie électrique générée.

14. Aéronef comprenant un dispositif de propulsion selon la revendication 13.

15. Procédé de fonctionnement d'un système de pile à combustible (1, 2) selon l'une quelconque des revendications 1 à 12, le procédé comprenant les étapes de :
(a) fonctionnement du sous-système de refroidissement (300) en tant que sous-système de refroidissement en boucle fermée, dans lequel le trajet de fluide de refroidissement allant du premier agencement multisoupape (315), à travers l'échangeur de chaleur à fluide de refroidissement (320), jusqu'au réservoir de fluide de refroidissement (305) est ouvert, et le trajet de fluide de refroidissement allant du premier agencement multisoupape (315) jusqu'à l'échappement de fluide de refroidissement (325) est fermé, en commutant le premier agencement de soupape multisortie (315) dans le premier état ; et
(b) fonctionnement du sous-système de refroidissement (300) en tant que sous-système de refroidissement à ventilation ouverte, dans lequel le trajet de fluide de refroidissement allant du premier agencement multisoupape (315) jusqu'à l'échappement de fluide de refroidissement (325) est ouvert, et le trajet de fluide de refroidissement allant du premier agencement multisoupape (315), à travers l'échangeur de chaleur à fluide de refroidissement (320), jusqu'au réservoir de fluide de refroidissement (305) est fermé, en commutant le premier agencement de soupape multisortie (315) dans le second état ;
ladite commutation du premier agencement de soupape multisortie (315) entre le premier état et le second état dépendant de la puissance thermique requise du sous-système de refroidissement (300) à travers l'empilement de piles à combustible (100) et de la puissance thermique réalisable du sous-système de refroidissement (300) à travers l'échangeur de chaleur à fluide de refroidissement (320).
